# EUROPEAN PATENT APPLICATION

(11) **EP 0 540 326 A2**
(43) Date of publication of application: **05.05.1993**
(21) Application number: 92309908.9
(22) Date of filing: 29.10.1992
(51) Int. Cl.: B01D 25/176

(54) **Improvements to filter fabrics**

(30) Priority: 31.10.1991 GB 9123143
(71) Applicant: SCAPA GROUP PLC, Blackburn, Lancashire BB2 6AY (GB)
(72) Inventor: Bennett, Roy, Rochdale, Lancashire OL11 2AQ (GB); Doran, Frederick, Rossendale, Lancashire BB4 6QP (GB)
(74) Representative: Quest, Barry

(57) **Abstract**

A method of forming a barrel neck connection between filter cloths (22, 23) for application to an apertured press plate is proposed, the method involving the steps of creating an aperture (13) in a flange-forming fabric having thermoplastic properties, heating the fabric in a region extending about the said aperture (13), and displacing the fabric in such region to form an outwardly extending tube (18) for telescoping engagement with a corresponding tube formed in a second flange-forming fabric arranged in opposed disposition with respect thereto. Displacement of the fabric is ordinarily effected by a plug (15) which is brought into contact with the fabric (11) and is moved into progressive engagement with a through hole (16) in a support (12) supporting the fabric (11) the plug (15) being heated and serving to heat the flange-forming material in the relevant region thereof. The flange-forming material may itself comprise a filter cloth.

## Description

The invention concerns improvements in or relating to filter fabrics, and has more particular reference to a method of forming a barrel neck connection for or between spaced filter cloths in producing a filter fabric for a filter press.

Filter cloths for use in filter presses which comprise side-by-side plates defining filter chambers therebetween are known which comprise separate filter cloths joined together by a barrel neck so positioned as to be registrable with a feed aperture in the plate, the neck being positioned to extend through the feed aperture with the individual filter cloths lying against the respective faces of the press plate.

For operational reasons it is desirable that the barrel neck be impermeable to the filtrate.

It is known in the art to provide a barrel neck as a flanged jointing tube and to secure the flanges each to a respective cloth as by sewing or by utilising polyproplyene attachment rings having ferromagnetic particles therein which, on being subjected to induction radiation, serve to melt the polypropylene material of the ring and cause the same to adhere to the flange and to the filter cloth. The jointing tube may be fabricated from a woven textile material which is of inherently low permeability or is rendered relatively impermeable as by coating or may comprise a moulded synthetic rubber structure.

The fabrication of barrel necks from woven textile material is an intricate and time-consuming operation, and requires a high degree of operator skill whilst, in the case of the moulded barrel neck, the heat generated by the induction radiation rigidises the material of the tube and makes more difficult the fitting of the filter fabrics to the press plate.

The object of the present invention is to provide an improved method for producing barrel necked filter fabrics which avoids, at least in part, the disadvantages experienced in relation to known structures.

According to the present invention there is proposed a method of forming a barrel neck connection between filter cloths which includes the steps of providing a first flange-forming fabric having thermoplastic properties, creating an aperture in said fabric, heating the material about the periphery of said aperture, displacing the heated material from the plane of the fabric to form an outwardly extending tube and engaging said tube in secure relationship with a corresponding tube provided on an opposing fabric.

Preferably the corresponding tubes are dimensioned for close but free telescoping engagement one with the other.

According to a further preferred feature, each flange-forming fabric comprises a filter cloth.

According to a still further preferred feature the tubes are engaged in secure relationship by means of an adhesive or by RF or ultrasonic welding.

The invention will now be described further, by way of example, with reference to the accompanying diagrammatic drawings illustrating two embodiments thereof and in which :
Figs. 1a to 1d show the successive stages in creating a tube in a flange-forming material;
Fig. 2 shows the interengagement of two tubes in forming a barrel neck;
Fig. 3 shows the barrel neck of Fig. 2 as applied to two filter cloths in forming a filter fabric; and
Fig. 4 shows a filter fabric, including the barrel neck of Fig. 2, in position relative to a filter plate.

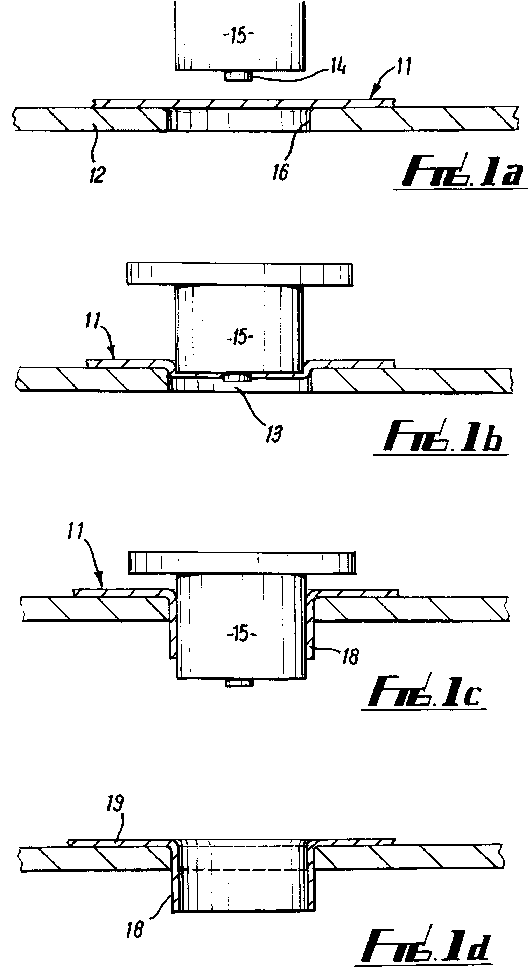

Referring now to the drawings, and particularly to Figs. 1a to 1d thereof, in forming a barrel neck connection between two filter cloths, a first flange-forming fabric 11 of woven construction and comprising thermoplastic yarns is secured to a support 12 and an aperture 13 is formed therein by a cutter 14 provided at the underside of plug 15, the plug 15 being provided in register with a through hole 16 in the support 12 and being movable in a direction perpendicular to said support.

The plug 15 is clearance in the through hole 16 to an extent sufficient to accommodate the thickness of the fabric 11 and is adapted to supply heat to said fabric.

On continuing downward movement of the plug 15 into progressive engagement with the hole 16 in the support 12 that portion of the material of the fabric 11 existing about the aperture 13 therein is heated and, due to the thermoplastic nature of the yarns, is brought into cylindrical form, the resultant tube 18 being generally at right angles to the body (or flange) 19 of the fabric 11.

The plug 15 is withdrawn and on cooling of the material, the tube 18 maintains its form.

A second flange-forming fabric is subjected to a similar procedure, although in this case the hole in the support and the outside dimensions of the plug will ordinarily differ by an amount approximating to the thickness of the fabric, so as to provide a close male/female interfit between the tubes of the respective fabrics on partial engagement thereof.

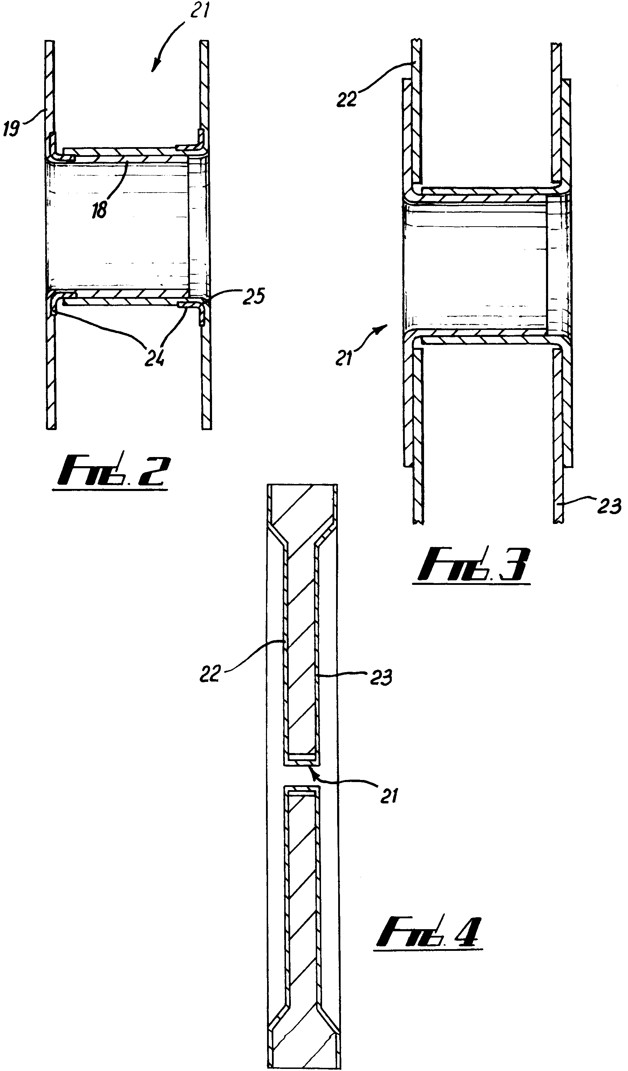

As will be appreciated, that part of the flange-forming fabric 11 overlying the support will generally be of annular form, or will be brought to such form, and the tubes 18 of the respective fabrics will be engaged one with the other and will be secured in such disposition, as by an adhesive or in any other convenient manner, to give the arrangement shown in Fig. 2. It is to be appreciated, however, that the axial extent of interengagement of the tubes may be less than the full engagement shown, subject to there being a sufficient overlap to ensure satisfactory connection therebetween.

The resultant barrel neck 21 will be secured to two filter cloths 22, 23, one to each of the flanges, in conventional manner to give a double-cloth filter fabric of the kind shown in Fig. 3.

However, the invention as hereinproposed does readily lend itself to the formation of tubes about apertures formed in filter cloths per se, and thus the flange-forming fabric referred to in the context of Figs. 1a to 1d may itself be a full filter cloth to be secured to an opposing cloth by engagement of the tubes of the respective filter cloths.

The invention is not limited to the particular detail of the embodiment hereinbefore described since alternatives will readily present themselves to one skilled in the art. Thus, for example, whilst the invention has been described in the context of a woven flange-forming fabric, such fabric could be knitted or of non-woven form. Typical of the non-woven fabrics thought to be of likely application are needled or spun-bonded fabrics, the textile material existing therein as yarns or fibres. In order to render the barrel-neck impermeable, as an alternative to coating the tubes with a Neoprene latex, an annular disc of a thermoplastic film may be superimposed upon the flange-forming fabric to overlie that region thereof which is to be deformed to create the tube, the film melting on the application of heat to form a coating at the inside surface of the tube.

The cutter as provided at the underside of the plug will ordinarily be of 'hot wire' form, but it is to be understood that the aperture can be formed otherwise than by cutter means provided on the plug.

Heating is conveniently affected via the plug but hot air means may be preferred in some instances. In the event that heating is indeed effected by means of the plug, it may be found convenient to provide the same in the form of a hollow ferromagnetic body and to provide an induction coil at the interior of said body. Other known forms of heating may, however, be utilised.

It may be found convenient to provide a cooling means to ensure rapid cooling on completion of the deformation of the material.

A further proposal is to introduce a fast cure dispersion 24 into the material of the flange forming fabric in the region of the root of the tube 18 (Fig. 2), to assist in the formation of a secure shoulder 25 between the body of the fabric and the tube and to minimise any resiling of the fabric in such region on removal of the plug.

Whilst it is preferred to create the tube by utilising a plug in the manner indicated, such alternative techniques as vacuum forming or blow moulding may be utilised, it being appreciated that a need may exist, in such circumstances, to reduce the permeability of the flange-forming material to facilitate formation of the tube.

## Claims

1. A method of forming a barrel neck connection between filter cloths which includes the steps of providing a first flange-forming fabric having thermoplastic properties, creating an aperture in said fabric, heating the material about the periphery of said aperture, displacing the heated material from the plane of the fabric to form an outwardly extending tube and engaging said tube in secure relationship with a corresponding tube provided on an opposing fabric.

2. The method as claimed in claim 1, wherein the corresponding tubes are dimensioned for close but free telescoping engagement one with the other.

3. The method as claimed in claim 1 or 2, wherein the tubes are engaged in secure relationship by means of an adhesive or by RF or ultrasonic welding.

4. The method as claimed in any one of the preceding claims, wherein each flange-forming fabric comprises a filter cloth.

5. The method as claimed in any one of claims 1 to 3, including the further step of securing a respective filter fabric to each of the flanges existing at a tube end.

6. The method as claimed in any one of the preceding claims, including the step of positioning the flange-forming fabric on an apertured support, the aperture in the support corresponding to the intended outside diameter of the tube and the aperture created in the fabric being coaxial with the said aperture in the support.

7. The method as claimed in any one of the preceding claims, wherein the said heated material existing about the periphery of the aperture created in the flange-forming fabric is displaced from the plane of the fabric by a plug movable through the said plane.

8. The method as claimed in claim 7, wherein the plug is heated, thereby to heat that part of the flange-forming fabric existing about the periphery of the aperture created in said fabric.

9. The method as claimed in any one of claims 1 to 6, wherein the displacement of the said heated material existing about the periphery of the aperture created in the fabric is effected utilising a blow moulding or vacuum forming technique.

10. The method as claimed in any one of the preceding claims, wherein the said aperture in the flange-forming fabric is created by a hot-wire cutter.

11. The method as claimed in any one of the preceding claims, including the further step of introducing a fast cure dispersion in the region of the root of the intended tube.

12. A barrel neck connection produced in accordance with the method claimed in any one of the preceding claims.
